(19) Europäisches Patentamt / European Patent Office / Office européen des brevets

(11) **EP 2 289 118 B1**

(12) **EUROPÄISCHE PATENTSCHRIFT**

(45) Veröffentlichungstag und Bekanntmachung des Hinweises auf die Patenterteilung:
**30.01.2013 Patentblatt 2013/05**

(21) Anmeldenummer: **09765686.2**

(22) Anmeldetag: **12.05.2009**

(51) Int Cl.:
*H01L 41/113* (2006.01)     *H02N 2/18* (2006.01)

(86) Internationale Anmeldenummer:
**PCT/EP2009/055724**

(87) Internationale Veröffentlichungsnummer:
**WO 2009/153106 (23.12.2009 Gazette 2009/52)**

(54) **VORRICHTUNG ZUR ERZEUGUNG ELEKTRISCHER ENERGIE AUS MECHANISCHEN VIBRATIONEN VERSCHIEDENSTER AMPLITUDEN UND FREQUENZEN MITTELS PIEZOAKTOREN**

APPARATUS FOR GENERATING ELECTRIC ENERGY FROM MECHANICAL VIBRATIONS HAVING A WIDE VARIETY OF AMPLITUDES AND FREQUENCIES BY MEANS OF PIEZO ACTUATORS

DISPOSITIF POUR PRODUIRE DE L ÉNERGIE ÉLECTRIQUE À PARTIR DE VIBRATIONS MÉCANIQUES D AMPLITUDES ET FRÉQUENCES DIFFÉRENTES AU MOYEN D ACTIONNEURS PIÉZOÉLECTRIQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.06.2008 DE 102008029374**

(43) Veröffentlichungstag der Anmeldung:
**02.03.2011 Patentblatt 2011/09**

(73) Patentinhaber: **Siemens Aktiengesellschaft 80333 München (DE)**

(72) Erfinder:
• **STEINKOPFF, Thorsten**
**85658 Egmating (DE)**
• **WOLFF, Andreas**
**81825 München (DE)**

(56) Entgegenhaltungen:
WO-A-2006/111507     WO-A-2008/025778
GB-A- 2 438 242       US-A1- 2007 114 890

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine Vorrichtung gemäß dem Oberbegriff des Hauptanspruchs und eine Verwendung gemäß dem Nebenanspruch.

Zur Erzeugung von elektrischer Energie aus mechanischer Energie, werden ebenso Piezomultilayersensoren als Energiewandler verwendet. Liegt die mechanische Energie in Form breitbandiger mechanischer Schwingungen vor, ist es schwierig, diese an den Piezosensor optimal anzukoppeln.

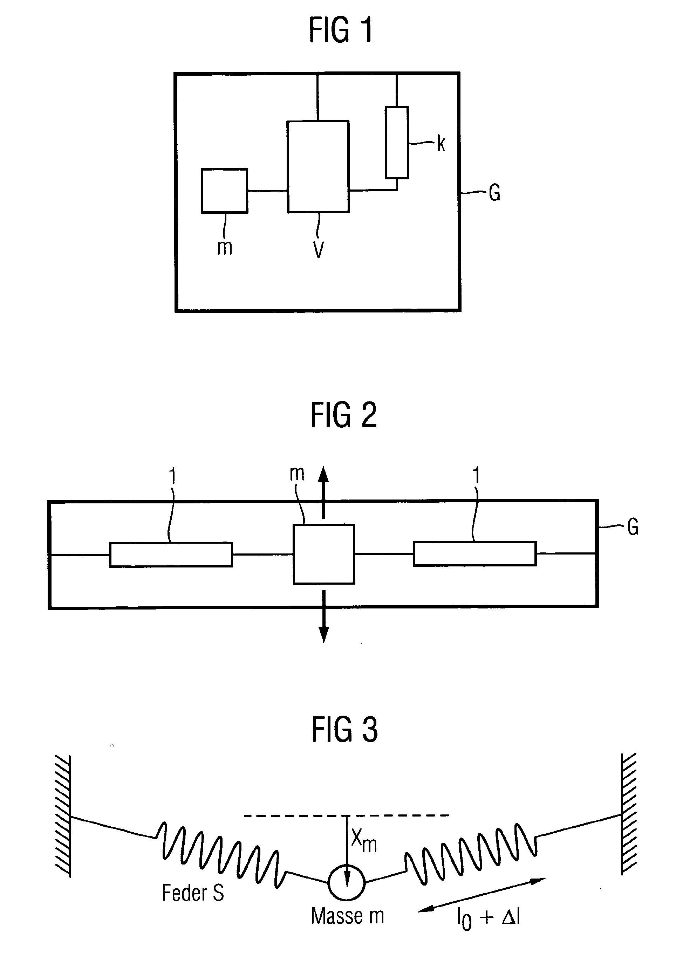

Herkömmlich sind Energiewandler, die mechanische Hebelübersetzer mit einem konstanten Übersetzungsverhältnis V = konstant verwenden. Die Vibration wirkt von außen auf das Gehäuse G, dargestellt in Figur 1, ein. Ein derartiges Gehäuse G ist über den Hebelübersetzer V und den Energiewandler k mit einer seismischen Masse m verbunden. Aufgrund der Trägheit der Masse m kommt es zu einer Relativbewegung dieser Masse m zum Gehäuse G, wobei die Relativbewegung über den Übersetzer V auf den Energiewandler k einwirkt und in elektrische Energie gewandelt wird.

Ein herkömmlicher mechanischer Übersetzer wandelt die Wege und Kräfte wie folgt:

$$\text{Gleichung 1} \qquad V = \frac{F_{Out}}{F_{In}} = \frac{X_{In}}{X_{Out}}$$

mit

$x_{In}$ auf den mechanischen Übersetzer wirkende Auslenkung

$x_{Out}$ vom mechanischen Übersetzer generierte Auslenkung

$F_{In}$ auf den mechanischen Übersetzer wirkende Kraft

$F_{Out}$ vom mechanischen Übersetzer generierte Kraft. Die Kraftamplitude $F_{Piezo}$, die bei einer äußeren Vibration der Amplitude x mit einer Frequenz f ($\omega = 2\pi f$) des Gehäuses G, auf den Energiewandler k einwirkt, ergibt sich zu:

$$\text{Gleichung 2} \qquad F_{Piezo} = V \cdot k \cdot x \cdot \left( \frac{1}{1 - \frac{\omega^2 \cdot V^2 \cdot m}{k}} - 1 \right)$$

mit

k Steifigkeit des Piezowandlers

x Amplitude des Vibrationshubes

$\omega$ Kreisfrequenz der Vibration

m Schwingmasse

$F_{Piezo}$ resultierende Kraft auf den Piezowandler.

Um diese Vorrichtung optimal an diese Vibration x * sin ($\omega$t) anzupassen, muss die Hebelübersetzung $V_{max}$ entsprechend folgender Bedingung gewählt werden:

$$\text{Gleichung 3} \qquad V_{max} = \sqrt{\frac{3 \cdot k}{\omega^2 \cdot m}}$$

Diese Bedingung besagt, dass bei gegebener Schwingmasse m und gegebener Wandlersteifigkeit k das op- timale Übersetzungsverhältnis $V_{max}$ von der Frequenz $\omega$ der Vibration abhängt. Das heißt, bei einer sich ändernden Vibrationsfrequenz $\omega$ müsste auch die Hebelübersetzung V entsprechend angepasst werden, um eine maximale Kraft am Piezoelement und damit eine optimale Umwandlung in elektrische Energie zu bewirken.

Die GB 2 438 242 A1 offenbart einen Generator zum Ernten von Vibrationsenergie, wobei die Vorrichtung eine Tragestruktur aufweist, die einen piezoelektrischen Balken trägt. Ein Vorspannungselement, beispielsweise eine Spulenfeder, ist zwischen dem freien Ende des piezoelektrischen Balkens und der Tragestruktur gekoppelt.

Die WO 2008/025778 A offenbart eine Vorrichtung, insbesondere ein Mikrosystem, das eine Einrichtung zur Energieumwandlung umfasst. Die Einrichtung zur Energieumwandlung weist eine piezoelektrische, mechanische schwingfähige Membranstruktur zur Umwandlung von mechanischer Energie in elektrische Energie und/oder umgekehrt auf, wobei die Membranstruktur in einer Umgebung verkapselt angeordnet ist, die einen vorbestimmten Druck aufweist, der insbesondere geringer als ein isostatischer Druck ist.

Es ist Aufgabe der Erfindung eine Vorrichtung bereitzustellen, die für einen breiten Frequenz- und Amplitudenbereich von mechanischen Schwingungen eine wirksame Anpassung an einen Piezosensorenergiewandler bewirkt.

Die Aufgabe wird durch eine Vorrichtung gemäß dem Hauptanspruch und Verwendungen gemäß den Nebenansprüchen gelöst. Ein Übersetzungsverhältnis (V) wird variabel bereitgestellt. Das Übersetzungsverhältnis ist das Verhältnis der Auslenkung der Schwingmasse zur Verlängerung eines Piezosensors durch diese Auslenkung.

Weitere vorteilhafte Ausgestaltungen werden in Verbindung mit den Unteransprüchen beansprucht.

Gemäß einer vorteilhaften Ausgestaltung wird eine seismische Masse oder Schwingmasse mittels mindestens zwei Piezosensoreinheiten in einem Gehäuserahmen oder Gehäuse eingespannt. Insbesondere sind die Piezosensoreinheiten und die Schwingmasse entlang einer Geraden angeordnet. Die Schwingmasse ist insbesondere in der Mitte zwischen den Piezosensoreinheiten schwingfähig positioniert.

Gemäß einer vorteilhaften Ausgestaltung ist eine Piezosensoreinheit ein in eine Feder eingeklemmter Piezosensor.

Gemäß einer weiteren vorteilhaften Ausgestaltung ist der Piezosensor ein Piezomultilayersensor.

Gemäß einer weiteren vorteilhaften Ausgestaltung ist die Feder eine Rohrfeder.

Gemäß einer weiteren vorteilhaften Ausgestaltung ist die Schwingmasse senkrecht zu einer Längsrichtung der Federn auslenkbar.

Gemäß einer weiteren vorteilhaften Ausgestaltung ist ein Übersetzungsverhältnis einer Auslenkung der Schwingmasse bzgl. des Rahmens umgekehrt proportional. Bei dieser Vorrichtung ist das Übersetzungsverhältnis der Auslenkung der seismischen Masse bzgl. des Rahmens der Aufhängung umgekehrt proportional.

Gemäß einer weiteren vorteilhaften Ausgestaltung ist eine effektive Steifigkeit des Schwingmasse-Feder-Systems proportional zum Quadrat einer Auslenkung. Aufgrund der geometrischen Verhältnisse ist die die Rückstellkräfte der Piezosensoreinheiten kennzeichnende Verlängerung einer Feder proportional zum Quadrat der Auslenkung. Dies hat zur Folge, dass die effektive Steifigkeit des Masse-Feder-Systems proportional zum Quadrat der Auslenkung ist. Damit ergibt sich neben der erfindungsgemäß bewirkten Effizienzsteigerung der Energiewandlung von breitbandigen Schwingungen ein weiterer Vorteil. Durch die mit der Schwingungsamplitude ansteigende Steifigkeit wird die Schwingmasse progressiv abgebremst und eventuelle extreme mechanische Stöße werden abgemildert. Damit ist die Wegtransformation robuster gegen extreme mechanische Stöße, die die verwendeten Piezomaterialien schädigen könnten.

Gemäß einer weiteren vorteilhaften Ausgestaltung sind die Federn im Wesentlichen auf Zug beansprucht. Auf diese Weise sind bei einer starken Belastung die unter Vorspannung stehenden geklemmten Piezowandler ungünstigsten Falls völlig ohne Vorspannung. Dies ist eine weitere Ursache dafür, dass die Wegtransformation robuster gegen extreme mechanische Stöße ist, die die verwendeten Piezomaterialien schädigen könnten.

Gemäß einer weiteren alternativen vorteilhaften Ausgestaltung sind die Piezosensoren vorgespannt und lediglich Druckkräften ausgesetzt. Die geklemmten Piezowandler geraten damit nie unter Zug. Zugkräfte könnten zu Rissen und damit Ausfall der Piezowandler führen.

Gemäß einer weiteren vorteilhaften Ausgestaltung sind die Piezosensoren in einer auf Druck ausgelegten Konstruktion ineinander greifender und entsprechend vorgespannter Federhülsen fixiert. Auf diese Weise wird die angesprochene Möglichkeit, dass der Piezowandler bei zu hoher Auslenkung vorspannungsfrei nicht mehr in der Rohrfeder fixiert ist, umgangen, indem eine auf Druck ausgelegte Konstruktion ineinander greifender und entsprechend vorgespannter Federhülsen zur Fixierung des Wandlers verwendet wird.

Die vorliegende Erfindung wird anhand von Ausführungsbeispielen in Verbindung mit den Figuren näher beschrieben. Es zeigen:

Fig. 1    einen herkömmlichen Energiewandler;

Fig. 2    ein Ausführungsbeispiel eines erfindungsgemäßen Energiewandlers;

Fig. 3    eine Darstellung zum Auslenkungsverhalten des erfindungsgemäßen Ausführungsbeispieles;

Fig. 4    Darstellungen zum Übersetzungsverhältnis und zur effektiven Steifigkeit eines erfindungsgemäßen Masse-Feder-Systems;

Fig. 5    Darstellungen von Frequenzspektren eines herkömmlichen Energiewandlers und eines erfindungsgemäßen Energiewandlers;

Fig. 6    ein weiteres Ausführungsbeispiel einer auf Druck ausgelegten Hülsenkonstruktion einer erfindungsgemäßen Feder.

Figur 1 zeigt ein Ausführungsbeispiel eines Energiewandlers gemäß dem Stand der Technik. Dabei ist ein Gehäuse G bereitgestellt. An das Gehäuse ist ein mechanischer Übersetzer mit dem Übersetzungsfaktor V angekoppelt. An den mechanischen Übersetzer ist eine seismische Masse m angekoppelt. An den mechanischen Übersetzer ist ebenso ein piezoelektrischer Wandler der Steifigkeit k angekoppelt. Der piezoelektrische Wandler ist ebenso direkt an das Gehäuse G angekoppelt.

Figur 2 zeigt ein erfindungsgemäßes Ausführungsbeispiel eines Energiewandlers. Dabei bezeichnet das Bezugszeichen 1 eine Piezosensoreinheit. Eine seismische Masse m ist über mindestens 2 Piezosensoreinheiten 1 in einem Rahmen eines Gehäuses G eingespannt. Eine Piezosensoreinheit 1 ist eine in einer Rohrfeder eingeklemmte Piezomultilayersensoreinheit. Dabei ist eine Piezosensoreinheit 1 an ein Gehäuse G und an die seismische Masse m gekoppelt. Aufgrund der geometrischen Verhältnisse, die Kraft- und Bewegungsrichtungen sind mittels Pfeile dargestellt, ist die die Rückstellkräfte der Piezosensoreinheiten 1 kennzeichnenden Verlängerung $\Delta l$ proportional zum Quadrat der Auslenkung $x_m$. Dies hat zur Folge, dass die effektive Steifigkeit des Masse-Feder-Systems proportional zum Quadrat der Auslenkung ist.

Figur 3 zeigt eine Darstellung zum Auslenkungsverhalten des Masse-Feder-Systems des erfindungsgemäßen Ausführungsbeispiels. Dabei bezeichnet S eine Feder. Zwei Federn halten eine Masse m zwischen einem Gehäuses G. Die Federn können an einem Rahmen des Gehäuses G fixiert sein. Die Masse m ist senkrecht zu einer Längsrichtung der Federn S auslenkbar. Mit einer Auslenkung $x_m$ wird die Ursprungslänge $l_0$ um eine Länge $\Delta l$ gedehnt.

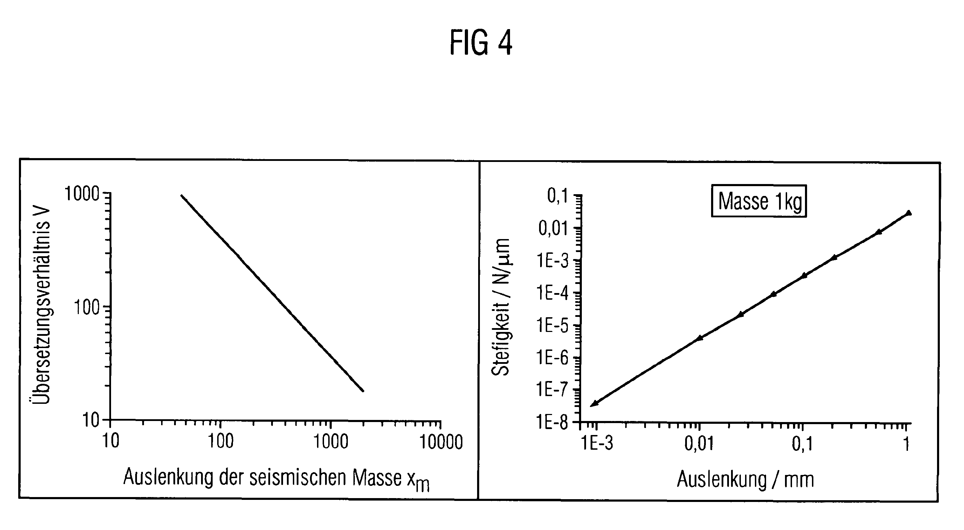

Figur 4 zeigt Darstellungen hinsichtlich des Übersetzungsverhältnisses und der effektiven Steifigkeit des Masse-Feder-Systems gemäß der vorliegenden Erfindung. Figur 4 zeigt auf der linken Seite das Übersetzungsverhältnis V über der Auslenkung der seismischen Masse $x_m$. Figur 4 zeigt auf der rechten Seite die effektive Steifigkeit des Masse-Feder-Systems über der Auslenkung der seismischen Masse $x_m$. Das erfindungsgemäße variable Übersetzungsverhältnis $V = f(x_m) = a/x_m$ bewirkt eine verbesserte Krafteinwirkung auf den Piezowandler in Vergleich zu einem festen Übersetzungsverhältnis V = konstant. Berechnungen belegen im gesamten in Betracht gezogenen Frequenzbereich eine gesteigerte Kraftamplitude an den Energiewandlern.

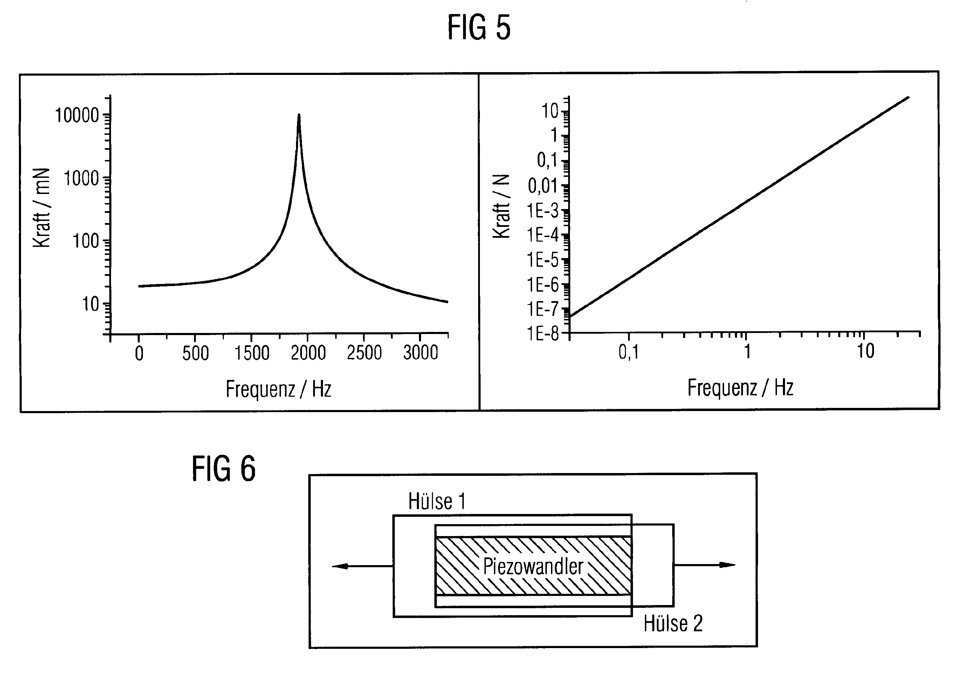

Figur 5 zeigt Darstellungen zum Frequenzspektrum der an den Wandlern erzeugten Kraftamplituden. Dabei zeigt die linke Darstellung ein herkömmliches konstantes Übersetzungsverhältnis V = konstant. Die rechte Darstellung zeigt ein variables Übersetzungsverhältnis $V = f(x_m) = a/x_m$. Dabei ist jeweils die Kraft über der Frequenz aufgetragen.

Figur 6 zeigt ein weiteres Ausführungsbeispiel einer erfindungsgemäßen Piezosensoreinheit 1. Auf diese Weise wird die Möglichkeit umgangen, dass ein Piezowandler bei zu hoher Auslenkung vorspannungsfrei nicht mehr in der Rohrfeder fixiert ist. Eine auf Druck ausgelegte Konstruktion ineinander greifender und entsprechend vorgespannter Federhülsen wird dabei zur Fixierung des Piezowandlers verwendet. Figur 6 zeigt eine auf Druck ausgelegte Hülsenkonstruktion.

**Patentansprüche**

1.    Vorrichtung zur Ankopplung von mechanischer Energie in Form breitbandiger mechanischer Schwingungen an einen Piezosensor zur Wandlung der mechanischen Energie in elektrische Energie, mit einem Gehäuse (G), auf das die mechanische Energie in Form der Schwingungen wirkt; einer Schwingmasse (m); wobei

- ein Übersetzungsverhältnis (V) variabel bereitgestellt und, eine effektive Steifigkeit ($k_{eff}$) des Schwingmasse-Feder-Systems proportional zum Quadrat einer Auslenkung ist,
- die Schwingmasse (m) mittels zwei jeweils eine Rohrfeder (S) aufweisenden Piezosensoreinheiten (1) in einem Gehäuse (G) eingespannt und senkrecht zu einer Längsrichtung der Rohrfedern (S) auslenkbar ist, wobei die Piezosensoreinheiten (1) jeweils einen in eine Rohrfeder (S) eingeklemmten Piezomultilayersensor aufweisen.

2.    Vorrichtung nach Anspruch 1, wobei das Übersetzungsverhältnis (V) einer Auslenkung ($x_m$) der Schwingmasse (m) bezüglich des Gehäuses (G) umgekehrt proportional ist.

**3.** Vorrichtung nach Anspruch 1,
wobei
die Rohrfedern (S) im Wesentlichen auf Zug beansprucht sind.

**4.** Vorrichtung nach Anspruch 1,
wobei
die Piezosensoren vorgespannt sind und lediglich Druckkräften ausgesetzt sind.

**5.** Vorrichtung nach Anspruch 4,
wobei
die Piezosensoren in einer auf Druck ausgelegten Konstruktion ineinander greifender und entsprechend vorgespannter Federhülsen fixiert sind.

**6.** Verwendung einer Vorrichtung nach einem der vorangehenden Ansprüche 1 bis 5, für eine Energiewandlung in einem Frequenzspektrum von null bis 100 Hz und Kraftamplituden im Bereich von $10^{-8}$ bis 100 N.

**7.** Verwendung einer Vorrichtung nach einem der vorangehenden Ansprüche 1 bis 5, für eine Energiewandlung in einem Auslenkungsbereich von $10^{-3}$ bis 1 mm, wobei die effektive Steifigkeit im Bereich von $10^{-8}$ bis 0,1 N/$\mu$m bei 1 kg Schwingmasse (m) liegt.

**Claims**

**1.** Apparatus for coupling mechanical energy in the form of wide band mechanical vibrations to a piezo sensor for converting the mechanical energy into electrical energy, with a
housing (G), on which the mechanical energy acts in the form of vibrations;
a vibrating mass (m); wherein

- a transmission ratio (V) is provided variably and an effective stiffness ($k_{eff}$) of the vibrating mass spring system is proportional to the square of a deflection,
- the vibrating mass (m) is able to be deflected perpendicular to a longitudinal direction of the springs (S) by means of two piezo sensor units (1) having a spring (S) in each instance

wherein
the piezo sensor units (1) each comprise a piezomultilayer sensor clamped in a spring (S).

**2.** Apparatus according to claim 1,
wherein
the transmission ratio (V) is inversely proportional to a deflection ($x_m$) of the vibrating mass (m) in relation to the housing (G).

**3.** Apparatus according to claim 1,
wherein
the springs (S) are essentially stressed for tension.

**4.** Apparatus according to claim 1,
wherein
the piezo sensors are pre-stressed and merely subjected to compression forces.

**5.** Apparatus according to claim 4,
wherein
the piezo sensors are fixed in a construction designed for pressure of spring sleeves engaging within one another and pretensioned accordingly.

**6.** Use of an apparatus according to one of the previous claims 1 to 5, for an energy conversion in a frequency spectrum from zero to 100 Hz and force amplitudes in the range of $10^{-8}$ to 100 N.

**7.** Use of an apparatus according to one of the previous claims 1 to 5, for an energy conversion in a deflection range

from $10^{-3}$ to 1 mm, with the effective stiffness ranging from $10^{-8}$ to 0.1 N/$\mu$m at 1 kg vibrating mass (m).

**Revendications**

1. Dispositif pour accoupler de l'énergie mécanique sous la forme d'oscillations mécaniques à large bande à un capteur piézoélectrique destiné à convertir l'énergie mécanique en énergie électrique, comprenant
un boîtier (G) sur lequel agit l'énergie mécanique sous ladite forme d'oscillations ;
une masse oscillante (m); dans lequel

    - un rapport de transformation (V) est fourni d'une manière variable et une rigidité effective ($k_{eff}$) du système masse oscillante/ressort est proportionnelle au carré d'une déviation,
    - la masse oscillante (m) est serrée dans un boîtier (G) au moyen de deux unités de capteur piézoélectrique (1) comprenant chacune un ressort tubulaire (S), et elle peut dévier perpendiculairement à un sens longitudinal des ressorts tubulaires (S),

    lesdites unités de capteur piézoélectrique (1) comprenant chacune un capteur piézoélectrique multicouche serré dans un ressort tubulaire (S).

2. Dispositif selon la revendication 1, dans lequel le rapport de transformation (V) d'une déviation ($x_m$) de la masse oscillante (m) par rapport au boîtier (G) est inversement proportionnel.

3. Dispositif selon la revendication 1, dans lequel les ressorts tubulaires (S) sont essentiellement sollicités en traction.

4. Dispositif selon la revendication 1, dans lequel les capteurs piézoélectriques sont précontraints et sont seulement soumis à des forces de compression.

5. Dispositif selon la revendication 4, dans lequel les capteurs piézoélectriques sont fixés sur une construction conçue pour la compression, composée de douilles élastiques qui s'engrènent et qui sont précontraintes en conséquence.

6. Utilisation d'un dispositif selon l'une des revendications précédentes 1 à 5 pour une conversion d'énergie dans un spectre de fréquences allant de zéro à 100 Hz et des amplitudes de force comprises entre $10^{-8}$ et 100 N.

7. Utilisation d'un dispositif selon l'une des revendications précédentes 1 à 5 pour une conversion d'énergie dans une plage de déviation allant de $10^{-3}$ à 1 mm, la rigidité effective étant située dans une plage comprise entre 10 et 0,1 N/$\mu$m pour 1 kg de masse oscillante (m).

## FIG 1

## FIG 2

## FIG 3

Feder S

Masse m

$X_m$

$l_0 + \Delta l$

## FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2438242 A1
- WO 2008025778 A